# EUROPÄISCHE PATENTSCHRIFT

(11) **EP 1 085 053 B1**
(45) Veröffentlichungstag und Bekanntmachung des Hinweises auf die Patenterteilung: **01.09.2004**
(21) Anmeldenummer: 00119419.0
(22) Anmeldetag: 13.09.2000
(51) Int. Cl.: C08L 83/07, C08K 5/541, C08L 83/04

(54) **Additionsvernetzende Siliconkautschukmischungen, ein Verfahren zu deren Herstellung, Verfahren zur Herstellung von Verbund-Formteilen und Verwendung der Siliconkautschukmischungen**
Addition reaction-curing silicone elastomer compositions,process for their production, process for the production of composite mouldings and their use
Compositions d'élastomères de silicone réticulables par réaction addition, leur procédé de préparation, procédé de préparation de pièces moulées en matériau composite et leur utilisation

(30) Priorität: 13.09.1999 DE 19943666
(43) Veröffentlichungstag der Anmeldung: 21.03.2001
(73) Patentinhaber: GE Bayer Silicones GmbH & Co. KG, 40699 Erkrath (DE)
(72) Erfinder: Bosshammer, Stephan, Dr., 50679 Köln (DE); Schmidt, Gunther, Dr., 40593 Düsseldorf (DE); Rist, Stefan, Dipl.-Ing., 51381 Leverkusen (DE)

(56) Entgegenhaltungen:
- EP-A- 0 350 951
- EP-A- 0 497 349

## Beschreibung

Die vorliegende Erfindung betrifft additionsvernetzende Siliconkautschuke, ein Verfahren zur Herstellung von Verbund-Formteilen.

Das Verfahren verwendet additionsvernetzende Siliconkautschukmischungen, bestehend im wesentlichen aus
(a) 100 Teilen mindestens eines alkenylgruppenhaltigen linearen oder verzweigten Organopolysiloxans mit mindestens 2 Alkenylgruppen mit einer Viskosität von 0,01 bis 30.000 Pas,
(b) mindestens einem Hydrogensiloxan,
(c) mindestens einem Pt- oder Rh-Katalysator und gegebenenfalls einem Inhibitor,
(d) 0,1 bis 20 Teilen Alkoxysilan,
(e) 0 bis 200 Teilen mindestens eines, gegebenenfalls oberflächlich modifizierten Füllstoffs
   und gegebenenfalls
(f) weiteren Hilfsstoffen und/oder
(g) Peroxid.

Derartige Siliconkautschukmischungen sind aus der EP-A-875 536 bekannt. Die erfindungsgemässen additionsvernetzenden Siliconkautschukmischungen zeichnen sich durch eine gute Haftung auf Substraten aus.
Es ist bekannt, die Haftung von additionsvernetzenden Siliconelastomeren auf verschiedenen Substraten durch ein oder mehrere Additive zu verbessern, die der unvernetzten Siliconkautschukmischung zugesetzt werden. In US-A 4.087.585 wird z.B. durch den Zusatz von 2 Additiven, einem kurzkettigen Polysiloxan mit mindestens einer SiOH-Gruppe und einem Silan mit mindestens einer Epoxygruppe und einer Si-gebundenen Alkoxygruppe, eine gute Haftung auf Aluminium erreicht. In EP-A 875536 wird eine verbesserte Haftung auf verschiedenen Kunststoffen mittels Verwendung eines Alkoxysilans mit einer Epoxygruppe sowie eines Hydrogensilans mit mindestens 20 SiH-Funktionen pro Molekül erreicht, wobei sich diese Mischungen auch durch eine verbesserte Reaktivität auszeichnen.
Die EP 350951 A2 offenbart eine einkomponentige Zusammensetzung eines Silikonelastomerklebers für die Haftung auf Glas und Eisen, die neben einem Vinylsiloxan, einem SiH-Siloxan, einer speziellen Kieselsäure, einem Epoxy- bzw. Acryloxy-alkoxysilan zusätzlich einen partiellen Allylether eines mehrwertigen Alkohols enthält.
Die EP 497 349 A2 offenbart eine einkomponentige, Platin-katalysierte Organosiloxanzusammensetzung, die eine kohäsive Haftung auf Thermoplastoberflächen ermöglicht, die neben einem Epoxy- bzw. Acryloxyalkoxysilan, ein Epoxysiloxanpolymer sowie eine weitere metallorganische Al- bzw. Zr-Verbindung enthält,.
Aufgabe der vorliegenden Erfindung ist die Bereitstellung eines Verfahrens zur Herstellung von Verbundformteilen. Unter Verwendung von additionsvernetzenden Siliconkautschukmischungen wird mit dem erfindungsgemäßen Verfahren eine gute Haftung auf Substraten erzielt, ohne dass für die Verarbeitung auf einem Spritzgussautomaten die Werkzeuge zur Verhinderung einer Werkzeughaftung beschichtet oder mit Formtrennmitteln behandelt werden müssen.
Die erfindungsgemäße Aufgabe wird durch die Bereitstellung des Verfahrens wie in den Ansprüchen definiert gelöst.

In der EP-A-875 536 wird der Einsatz von Glycidoxypropyltrimethoxysilan und weiterer Siloxane beschrieben. Die spezifische Kombination von Glycidoxypropyltrimethoxysilan und Methacryloxypropyltrimethoxysilan sowie deren Eignung zur Lösung der vorstehend genannten Aufgabe werden jedoch weder offenbart noch nahegelegt.

Das Verfahren eignet sich besonders gut zur Herstellung von Verbund-Formteilen, bei der die Verbindung mit einem Substrat aus anderem Material erzielt wird. Zur Erreichung der optimalen Haftung der verbundenen Materialien empfiehlt sich in der Regel eine Nachtemperung der Formteile.

Der Begriff Organopolysiloxane (a) im Sinne der Erfindung umfasst alle bisher in vernetzbaren Organopolysiloxanmassen eingesetzten Polysiloxane. Vorzugsweise handelt es sich bei (a) um ein Siloxan aus Einheiten der allgemeinen Formel (I)

(R¹)ₐ(R²)_{b}SiO_{(4-a-b)/2} (I),

in denen
- R¹: einen einwertigen aliphatischen Rest mit 1 bis 8 Kohlenstoffatomen und
- R²: einen Alkenylrest mit 2 bis 8 Kohlenstoffatomen bedeutet,
a = 0, 1, 2 oder 3,
b = 0, 1 oder 2
und die Summe a+b = 0, 1, 2 oder 3 ist,
mit der Massgabe, dass durchschnittlich mindestens 2 Reste R² pro Molekül vorliegen. Vorzugsweise ist (a) dimethylvinylsiloxyendgestoppt.

In einer bevorzugten Ausführungsform der Erfindung weisen die Organopolysiloxane (a) Viskositäten von 0,01 bis 200 Pas, ganz besonders bevorzugt 0,2 bis 200 Pas auf.

Die Viskositäten werden gemäss DIN 53 019 bei 20 °C bestimmt.

Herstellungsbedingt können insbesondere bei den verzweigten Polymeren, die auch in Lösungsmitteln gelöste Festharze sein können, noch bis maximal 10 Mol-% aller Si-Atome Alkoxy- oder OH-Gruppen aufweisen. Hydrogensiloxane (b) im Sinne der Erfindung sind vorzugsweise lineare, cyclische oder verzweigte Organopolysiloxane aus Einheiten der allgemeinen Formel (II)

(R¹)_{c}(H)_{d}SiO_{(4-c-d)/2} (II),

in denen
R¹ = einwertiger aliphatischer Rest mit 1 bis 8 Kohlenstoffatomen,
c = 0, 1, 2 oder 3,
d = 0, 1 oder 2,
wobei die Summe c+d = 0, 1, 2 oder 3 ist,
mit der Massgabe, dass durchschnittlich mindestens 2 Si-gebundene Wasserstoffatome je Molekül vorliegen.

Die Hydrogensiloxane (b) besitzen vorzugsweise eine Viskosität von 0,01 bis 5 Pas.

Katalysatoren (c) für die Vernetzungsreaktion sind vorzugsweise Pt (O)-Komplexe mit Alkenylsiloxanen als Liganden in katalytischen Mengen von 1 bis 100 ppm Pt oder Di-µ,µ'-dichloro-di(1,5-cyclooctadien)dirhodium. Als Rh-Verbindungen sind ebenfalls die in J. Appl. Polym. Sci 30, 1837-1846 (1985) beschriebenen Verbindungen einsetzbar.

Inhibitoren im Sinne der Erfindung sind alle gängigen Verbindungen, die bisher für diesen Zweck eingesetzt wurden. Beispiele für solche bevorzugten Inhibitoren sind z.B. 1,3-Divinyl-tetramethyldisiloxan, 1,3,5,7-Tetravinyl-1,3,5,7-tetramethylcyclotetrasiloxan, 2-Methylbutinol (2) oder 1-Ethinylcyclohexanol in Mengen von 50 bis 10.000 ppm.

Füllstoffe (e) im Sinne der Erfindung sind vorzugsweise verstärkende Füllstoffe, wie z.B. pyrogene oder gefällte Kieselsäure mit BET-Oberflächen zwischen 50 und 400 m²/g, die auch oberflächlich behandelt sein können, in Mengen von vorzugsweise 10 bis 50 Teilen, und/oder Extender-Füllstoffe, wie z.B. Quarzmehl, Diatomeenerden.

Die Oberflächenbehandlung kann auch in situ durch den Zusatz von Silazanen, wie Hexamethylsilazan und/oder Divinyltetramethyldisilazan sowie Vinylalkoxysilanen, wie z.B. Vinyltrimethoxysilan, und Wasser oder anderen gängigen Füllstoffbeladungsmitteln erfolgen.

In einer weiteren bevorzugten Ausführungsform der Erfindung enthält die Mischung weitere Hilfsstoffe (f), wie z.B. Phenylsilicone, die selbstschmierende Vulkanisate liefern, wie z.B. Copolymere aus Dimethylsiloxy- und Diphenylsiloxy- oder Methylphenylsiloxygruppen sowie Polysiloxane mit Methylphenylsiloxygruppen mit einer Viskosität von vorzugsweise 0,1 - 10 Pas oder Farbpasten.

In einer bevorzugten Ausführungsform der Erfindung enthält die erfindungsgemässe Siliconkautschukmischung zusätzlich mindestens ein Peroxid (g) in Mengen von 0,1 bis 2 Teilen, bezogen auf die Gesamtmischung. (ist hier nicht untersucht worden!)
Die Hydrogensiloxane (b) können zusätzlich auch Organopolysiloxane, deren Anzahl an SiH-Gruppen 2 < x < 20 beträgt, enthalten.
Die Hydrogensiloxane (b) können zusätzlich auch Organopolysiloxane, deren Anzahl an SiH-Gruppen 2 < x < 20 beträgt, enthalten.

Als Peroxide (g) sind Aroylperoxide, wie z.B. 2,4-Dichlorbenzoylperoxid und 4-Methylbenzoylperoxid, bevorzugt.

Gegenstand der Erfindung ist ein Verfahren zur Herstellung von Verbund-Formteilen aus Glas, Metallen oder Kunststoffen wie z. B. Polyethylenterephthalat, Polybutylenterephthalat, vollaromatische Polyester, flüssigkristalline Polyester, Polycyclohexylenterephthalat, Polytrimethylenterephthalat, Polyamidimide, Polyetherimide, Polyphenylenoxid, Polysulfon, Polyethersulfon, aromatische Polyetherketone, Fluorpolymere, syndiotaktisches Polystyrol, Ethylen-Kohlenmonoxid-Copolymere, Polyphenylensulfon, Polyarylensulfid, Polyphenylensulfoxid und mindestens einer erfindungsgemässen additionsvemetzenden Siliconkautschukmischung, wonach die additionsvernetzende Siliconkautschukmischung in 2 Teilmischungen aufgeteilt wird, von denen die erste mindestens ein Organopolysiloxan (a), Katalysator (c) und gegebenenfalls Füllstoffe (e) und/oder Hilfsstoffe (f) und die zweite mindestens ein Organopolysiloxan (a), mindestens ein Hydrogensiloxan (b), Glycidoxypropyltrimethoxysilan und Methacryloxypropyltrimethoxysilan (d) und gegebenenfalls Füllstoffe (e), Hilfsstoffe (f) und/oder Inhibitor (c) enthält, und diese erst im Spritzgiessautomaten oder in einem vorgelagerten Mischkopf mit anschliessendem Statikmischer zusammengeführt werden, ohne dass die Werkzeuge zur Verhinderung einer Werkzeughaftung beschichtet oder mit Formtrennmitteln behandelt werden müssen.

Ebenfalls Gegenstand der Erfindung ist ein weiteres Verfahren zur Herstellung von entsprechenden Verbund-Formteilen aus mindestens einer erfindungsgemässen additionsvernetzenden Siliconkautschukmischung, wonach die additionsvemetzende Siliconkautschukmischung in 3 Teilmischungen aufgeteilt wird, von denen die erste mindestens ein Organopolysiloxan (a), Katalysator (c) und gegebenenfalls Füllstoffe (e) und/oder Hilfsstoffe (f) und die zweite mindestens ein Organopolysiloxan (a), mindestens ein Hydrogensiloxan (b), und gegebenenfalls Füllstoffe (e), Hilfsstoffe (f) und/oder Inhibitor (c) und die dritte Glycidoxypropyltrimethoxysilan und Methacryloxypropyltrimethoxysilan (d) und gegebenenfalls Hydrogensiloxan (b), sofern nicht in der zweiten Teilmischung enthalten, sowie mindestens ein Organopolysiloxan (a) und Füllstoffe (e) enthält, und diese erst im Spritzgießautomaten oder in einem vorgelagerten Mischkopf mit anschließendem Statikmischer zusammengeführt werden.

Für die erfindungsgemäßen Verfahren sind alle gängigen Spritzgußautomaten einsetzbar.

Die Mengenverhältnisse der eingesetzten Komponenten entsprechen vorzugsweise denen, die für die erfindungsgemäß Siliconkautschukmischungen beschrieben wurden.

Gegenstand der Erfindung ist zudem die Verwendung der erfindungsgemäßen additionsvernetzenden Siliconkautschukmischung zur Herstellung von Verbund-Formteilen wie z.B. Dicht- und/oder Dämpfungselementen, Griffen o.ä.

Die nachfolgenden Beispiele, in denen alle Teile Gewichtsteile bedeuten, erläutern die Erfindung ohne dabei jedoch beschränkend zu wirken.

Die Haftung der ausgehärteten Siliconkautschukmischungen auf verschiedenen Substraten wird in Anlehnung an DIN 53 289 (Rollenschälversuch) mit jeweils 2 Probekörpern bei einer Zuggeschwindigkeit von 100 mm/min geprüft.

Die nachfolgenden Beispiele dienen der Erläuterung der Erfindung, ohne dabei auf diese beschränkt zu sein.

### Ausführungsbeispiele

### Beispiel 1

### Herstellung der 1. Komponente:

In einem Dissolver wurden 10 Teile dimethylvinylsiloxyendgestopptes Polydimethylsiloxan (a.1) mit einer Viskosität von 10 Pas und 18 Teile dimethylvinylsiloxyendgestopptes Polydimethylsiloxan (a.2) mit einer Viskosität von 65 Pas mit 3 Teilen Hexamethyldisilazan, 0,015 Teilen Tetramethyldivinyldisilazan und 1 Teil Wasser gemischt, anschließend mit 12 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 9 Teilen (a.1) und 0,13 Teilen eines dimethylvinylsiloxyendgestoppten Polydimethylsiloxan (a.3) mit methylvinylsiloxygruppen mit einem Vinylgehalt von 2 mmol/g und einer Viskosität von 0,2 Pas verdünnt. Nach dem Erkalten wurde die Mischung mit 0,00665 Teilen einer Pt-Komplexverbindung mit Alkenylsiloxan als Liganden in c) Tetramethyltetravinylcyclotetrasiloxan (Pt-Gehalt: 15 Gew.-%) vermischt.

### Herstellung der 2. Komponente:

In einem Dissolver wurden 10 Teile dimethylvinylsiloxyendgestopptes Polydimethylsiloxan (a.1) mit einer Viskosität von 10 Pas und 18 Teile dimethylvinylsiloxyendgestopptes Polydimethylsiloxan (a.2) mit einer Viskosität von 65 Pas mit 3 Teilen Hexamethyldisilazan, 0,015 Teilen Tetramethyldivinyldisilazan und 1 Teil Wasser gemischt, anschließend mit 13 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 7 Teilen (a.1) verdünnt. Nach dem Erkalten wurde die Mischung mit 1 Teil eines Hydrogensiloxans (b) mit einem mittleren SiH-Gehalt von 7,3 mmol/g und einem mittleren Gehalt von 20 SiH-Gruppen pro Molekül, mit 0,5 Teilen Glycidyloxypropyltrimethoxysilan, mit 0,25 Teilen Methacryloxypropyltrimethoxysilan sowie mit 0,07 Teilen Ethinylcyclohexanol als Inhibitor vermischt.
Die beiden Komponenten wurden in einer 2-Komponenten-Dosieranlage über einen Mischkopf mit anschliessendem Statikmischer auf einem Spritzgiessautomaten in ein Werkzeug (6 mm Dicke) mit einem eingelegten ca. 3 mm dicken Thermoplastteil aus Polybutylenterephthalat (PBT) oder Polyamid (PA 6.6) mit oder ohne Glasfaser eingespritzt und bei Werkzeugtemperaturen von 140-155 °C ausgehärtet (Tabelle 1)

**Tabelle 1**

| Substrat | Haftung* [N/mm] | Haftung* [N/mm] Nach zusätzlicher Temperung 1h/100 °C |
|---|---|---|
| PBT | 1,0 | 1,1 |
| PA 6.6 | 0,5 | 1,0 |
| PA 6.6 glasfaserverstärkt | 0,4 | 0,8 |

| | | |
|---|---|---|
| *Die Haftung wurde gemäss DIN 53 289 (Rollschälversuch) an jeweils 2 Probekörpern bei einer Zuggeschwindigkeit von 200 mm/min geprüft. | | |

### Beispiel 2

### Herstellung der 1. Komponente:

In einem Dissolver wurden 10 Teile dimethylvinylsiloxyendgestopptes Polydimethylsiloxan (a.1) mit einer Viskosität von 10 Pas und 18 Teile dimethylvinylsiloxyendgestopptes Polydimethylsiloxan (a.2) mit einer Viskosität von 65 Pas mit 3 Teilen Hexamethyldisilazan, 0,015 Teilen Tetramethyldivinyldisilazan und 1 Teil Wasser gemischt, anschließend mit 12 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 8 Teilen (a.1) und 0,13 Teilen eines dimethylvinylsiloxyendgestoppten Polydimethylsiloxan (a.3) mit methylvinylsiloxygruppen mit einem Vinylgehalt von 2 mmol/g und einer Viskosität von 0,2 Pas verdünnt. Nach dem Erkalten wurde die Mischung mit 0,7 Teilen Glycidyloxypropyltrimethoxysilan, mit 0,35 Teilen Methacryloxypropyltrimethoxysilan und 0,0066 Teilen einer Pt-Komplexverbindung mit Alkenylsiloxan als Liganden in c) Tetramethyltetravinylcyclotetrasiloxan (Pt-Gehalt: 15 Gew.-%) vermischt.

### Herstellung der 2. Komponente:

In einem Dissolver wurden 10 Teile dimethylvinylsiloxyendgestopptes Polydimethylsiloxan (a.1) mit einer Viskosität von 10 Pas und 18 Teile dimethylvinylsiloxyendgestopptes Polydimethylsiloxan (a.2) mit einer Viskosität von 65 Pas mit 3 Teilen Hexamethyldisilazan, 0,015 Teilen Tetramethyldivinyldisilazan und 1 Teil Wasser gemischt, anschließend mit 12 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 7 Teilen (a.1) verdünnt. Nach dem Erkalten wurde die Mischung mit 1 Teil eines Hydrogensiloxans (b) mit einem mittleren SiH-Gehalt von 7,3 mmol/g und einem mittleren Gehalt von 20 SiH-Gruppen pro Molekül, mit 0,7 Teilen Glycidyloxypropyltrimethoxysilan, mit 0,35 Teilen Methacryloxypropyltrimethoxysilan sowie mit 0,067 Teilen Ethinylcyclohexanol als Inhibitor vermischt.
Die beiden Komponenten wurden in einer 2-Komponenten-Dosieranlage über einen Mischkopf mit anschliessendem Statikmischer auf einem Spritzgiessautomaten in ein Werkzeug (6 mm Dicke) mit einem eingelegten ca. 3 mm dicken Thermoplastteil aus Polybutylenterephthalat (PBT) oder Polyamid (PA 6.6) mit oder ohne Glasfaser eingespritzt und bei Werkzeugtemperaturen von 140-155 °C ausgehärtet (Tabelle 2, Versuch 1). In einem analogen Versuch (Tabelle 2, Versuch 2) wurden zusätzlich zu den beiden Komponenten 2 % einer Paste von 50 % Glycidyloxypropyltrimethoxysilan, 25 % Methacryloxypropyltrimethoxysilan sowie 25 % dimethylvinylsiloxyendgestopptes Polydimethylsiloxan (a.1) mit einer Viskosität von 10 Pas als 3. Komponente über den Mischkopf mit eingespritzt.

**Tabelle 2**

| Substrat | Haftung* [N/mm] | Haftung* [N/mm] Nach zusätzlicher Temperung 1 h/100 °C |
|---|---|---|
| **Versuch 1** | | |
| PBT | 1,9 | 3,1 |
| PA 6.6 | 1,5 | 3,2 |
| PA 6.6 glasfaserverstärkt | 1,5 | 2,4 |

| **Versuch 2** | | |
|---|---|---|
| PBT | 2,4 | 4,1 |
| PA 6.6 | 3,4 | 3,9 |
| PA 6.6 glasfaserverstärkt | 1,5 | 3,4 |

| | | |
|---|---|---|
| *Die Haftung wurde gemäss DIN 53 289 (Rollschälversuch) an jeweils 2 Probekörpem bei einer Zuggeschwindigkeit von 200 mm/min geprüft. | | |

### Beispiel 3 (Vergleichsbeispiel)

Vergleichsbeispiel 3 zeigt, dass mit einer Mischung mit höherem SiH/SiVi-Verhältnis, wie sie in EP-A 875536 beschrieben ist, gleich nach der Vulkanisation bereits eine gute Haftung auf verschiedenen Substraten vorhanden ist, u.a. auch auf Stahl. Im Gegensatz dazu ist mit der Mischung, die in Beispiel 2 beschrieben ist, die Haftung gleich nach der Vulkanisation noch gering.

### Mischung mit erhöhtem SiH/SiVi-Verhältnis:

### Herstellung der 1. Komponente:

In einem Dissolver wurden 20 Teile dimethylvinylsiloxyendgestopptes Polydimethylsiloxan (a.1) mit einer Viskosität von 10 Pas und 36 Teile dimethylvinylsiloxyendgestopptes Polydimethylsiloxan (a.2) mit einer Viskosität von 65 Pas mit 5 Teilen Hexamethyldisilazan und 2 Teilen Wasser gemischt, anschließend mit 24 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 16 Teilen Polymer (a.1) und 0,3 Teilen eines dimethylvinylsiloxyendgestoppten Polydimethylsiloxan (a.3) mit methylvinylsiloxygruppen mit einem Vinylgehalt von 2 mmol/g und einer Viskosität von 0,2 Pas verdünnt. Nach dem Erkalten wurde die Mischung mit 0,013 Teilen einer Pt-Komplexverbindung mit Alkenylsiloxan als Liganden in c) Tetramethyltetravinylcyclotetrasiloxan (Pt-Gehalt: 15 Gew.-%) vermischt.

### Herstellung der 2. Komponente:

In einem Dissolver wurden 20 Teile dimethylvinylsiloxyendgestopptes Polydimethylsiloxan (a.1) mit einer Viskosität von 10 Pas und 36 Teile dimethylvinylsiloxyendgestopptes Polydimethylsiloxan (a.2) mit einer Viskosität von 65 Pas mit 5 Teilen Hexamethyldisilazan und 2 Teilen Wasser gemischt, anschließend mit 25 Teilen pyrogener Kieselsäure (e) mit einer BET-Oberfläche von 300 m²/g vermischt, auf ca. 100°C erwärmt, ca. 1 h gerührt und danach bei 150 bis 160°C von Wasser und überschüssigen Beladungsmittelresten befreit (zum Schluß im Vakuum bei p = 20 mbar) und anschließend mit 14 Teilen (a.1) verdünnt. Nach dem Erkalten wurde die Mischung mit 3 Teilen eines Hydrogensiloxans (b) mit einem mittleren SiH-Gehalt von 7,3 mmol/g und einem mittleren Gehalt von 20 SiH-Gruppen pro Molekül sowie mit 0,16 Teilen Ethinylcyclohexanol als Inhibitor vermischt.
Die beiden Komponenten wurden im Verhältnis 1:1 vermischt und zusätzlich mit 2 % einer Paste aus 60 % der 2.Komponente + 30 % eines linearen Polydimethylsiloxans mit einem mittleren Gehalt von 30 Methylhydrogensiloxygruppen und einem SiH-Gehalt von 15 mmol/g + 10 % Glycidyloxypropyltrimethoxysilan vermischt.
Die Vulkanisation zu den Verbundteilen erfolgte in einer Form (6 mm Dicke) mit 3 mm dicken eingelegten Substraten bei 135 °C/20 min. Die Verbundteile wurden nach der Vulkanisation 1 h bei Raumtemperatur gelagert. Die Ergebnisse sind in Tabelle 3 dargestellt.

| | Beispiel 4 | Beispiel 3 (Vergleich) |
|---|---|---|
| Substrat | Mischung aus Beispiel 2/Versuch 1** Haftung* [N/mm] | Mischung mit erhöhtem SiH/SiVi-Verhältnis Haftung* [N/mm] |
| Aluminium | <0,5 | 4,1 |
| Stahl | <0,5 | 4,2 |
| Messing | 2,1 | 4,7 |
| PBT | 1,8 | 3,6 |
| PA 6.6 | 2,6 | 3,7 |
| PA 6.6 glasfaserverstärkt | 2,6 | 3,5 |

| | | |
|---|---|---|
| *Die Haftung wurde gemäss DIN 53 289 (Rollschälversuch) an jeweils 2 Probekörpern bei einer Zuggeschwindigkeit von 200 mm/min geprüft. | | |
| **Im Beispiel 4 wurde die Mischung aus Beispiel 2 in einem Handversuch verarbeitet. | | |

## Patentansprüche

1. Verfahren zur Herstellung von Verbund-Formteilen mit mindestens einer additionsvernetzenden Siliconkautschukmischung bestehend im wesentlichen aus
(a) 100 Teilen mindestens eines alkenylgruppenhaltigen linearen oder verzweigten Organopolysiloxans mit mindestens 2 Alkenylgruppen mit einer Viskosität von 0,01 bis 30.000 Pas,
(b) mindestens einem Hydrogensiloxan,
(c) mindestens einem Pt- oder Rh-Katalysator und gegebenenfalls einem Inhibitor,
(d) 0,1 bis 20 Teilen Glycidoxypropyltrimethoxysilan und Methacryloxypropyltrimethoxysilan in Kombination,
(e) 0 bis 200 Teilen mindestens eines, gegebenenfalls oberflächlich modifizierten Füllstoffs
und gegebenenfalls
(f) weiteren Hilfsstoffen und/oder
(g) Peroxid,
worin das Hydrogensiloxan (b) mindestens 2 SiH-Funktionen pro Molekül aufweist und in einer solchen Menge vorliegt, dass das molare Verhältnis aller SiH-Gruppen zu der Gesamtmenge an Si-gebundenen Alkenylgruppen mindestens 1,0 beträgt,
**dadurch gekennzeichnet, dass** die additionsvernetzende Siliconkautschukmischung in 2 Teilmischungen aufgeteilt wird, von denen die erste mindestens ein Organopolysiloxan (a), Katalysator (c) und gegebenenfalls Füllstoffe (e) und/oder Hilfsstoffe (f) und die zweite mindestens ein Organopolysiloxan (a), mindestens ein Hydrogensiloxan (b), Glycidoxypropyltrimethoxysilan und Methacryloxypropyltrimethoxysilan (d) und gegebenenfalls Füllstoffe (e), Hilfsstoffe (f) und/oder Inhibitor (c) enthält, und diese beiden Teilmischungen erst im Spritzgießautomaten oder in einem vorgelagerten Mischkopf mit anschließendem Mischer zusammengeführt werden und an ein eingelegtes Substrat bzw. in der selben Form spritzgegossenes Substrat angespritzt werden.

2. Verfahren zur Herstellung von Verbund-Formteilen mit mindestens einer additionsvernetzenden Siliconkautschukmischung bestehend im wesentlichen aus
(a) 100 Teilen mindestens eines alkenylgruppenhaltigen linearen oder verzweigten Organopolysiloxans mit mindestens 2 Alkenylgruppen mit einer Viskosität von 0,01 bis 30.000 Pas,
(b) mindestens einem Hydrogensiloxan,
(c) mindestens einem Pt- oder Rh-Katalysator und gegebenenfalls einem Inhibitor,
(d) 0,1 bis 20 Teilen Glycidoxypropyltrimethoxysilan und Methacryloxypropyltrimethoxysilan in Kombination,
(e) 0 bis 200 Teilen mindestens eines, gegebenenfalls oberflächlich modifizierten Füllstoffs
und gegebenenfalls
(f) weiteren Hilfsstoffen und/oder
(g) Peroxid,
worin das Hydrogensiloxan (b) mindestens 2 SiH-Funktionen pro Molekül aufweist und in einer solchen Menge vorliegt, dass das molare Verhältnis aller SiH-Gruppen zu der Gesamtmenge an Si-gebundenen Alkenylgruppen mindestens 1,0 beträgt,
**dadurch gekennzeichnet, dass** die additionsvernetzende Siliconkautschukmischung in 3 Teilmischungen aufgeteilt wird, von denen die erste mindestens ein Organopolysiloxan (a), Katalysator (c) und gegebenenfalls die Füllstoffe (e) und/oder die Hilfsstoffe (f), die zweite mindestens ein Organopolysiloxan (a), mindestens ein Hydrogensiloxan (b), sofern nicht in der dritten Teilmischung enthalten und gegebenenfalls Füllstoffe (e), Hilfsstoffe (f) und/oder Inhibitor (c) und die dritte Glycidoxypropyltrimethoxysilan und Methacryloxypropyltrimethoxysilan (d) und gegebenenfalls Hydrogensiloxan (b), sofern nicht in der zweiten Teilmischung enthalten, sowie Organopolysiloxan (a) und Füllstoffe (e) enthält, und diese erst im Spritzgießautomaten oder in einem vorgelagerten Mischkopf mit anschließendem Statikmischer zusammengeführt werden und an ein eingelegtes Substrat bzw. in der selben Form spritzgegossenes Substrat angespritzt werden.

3. Verfahren nach Anspruch 1 oder 2, **dadurch gekennzeichnet, dass** das Organopolysiloxan (a) ein Siloxan aus Einheiten der allgemeinen Formel (I)
(R¹)ₐ(R²)_{b}SiO_{(4-a-b)/2} (I)
in denen
R¹ einen einwertigen aliphatischen Rest mit 1 bis 8 Kohlenstoffatomen und
R² einen Alkenylrest mit 2 bis 8 Kohlenstoffatomen bedeutet,
a = 0, 1, 2 oder 3,
b = 0, 1 oder 2
und die Summe a+b = 0, 1, 2 oder 3 ist,
mit der Maßgabe, dass durchschnittlich mindestens 2 Reste R² pro Molekül vorliegen.

4. Verfahren nach einem der Ansprüche 1 bis 3, **dadurch gekennzeichnet, dass** die Hydrogensiloxane (b) Siloxane aus Einheiten der allgemeinen Formel (II)
(R¹)_{c}(H)_{d}SiO_{(4-c-d)/2}
in denen
R¹ = einwertiger aliphatischer Rest mit 1 bis 8 Kohlenstoffatomen,
c=0, 1, 2 oder 3,
d = 0, 1 oder 2,
wobei die Summe c+d = 0, 1, 2 oder 3 ist,
mit der Maßgabe, dass durchschnittlich mindestens 2 Si-gebundene Wasserstoffatome je Molekül vorliegen.

5. Verfahren nach einem der Ansprüche 1 bis 4, **dadurch gekennzeichnet, dass** die Mischung als Peroxide 2,4-Dichlorbenzoylperoxid und 4-Methylperoxid enthält.

6. Verfahren nach einem der Ansprüche 1 bis 5 **dadurch gekennzeichnet, dass** das Gewichtsverhältnis Glycidoxypropyltrimethoxysilan : Methacryloxypropyltrimethoxysilan = 10 : 1 bis 1 : 10 ist.

7. Verfahren nach einem der Ansprüche 1 bis 6 **dadurch gekennzeichnet, dass** das Gewichtsverhältnis Glycidoxypropyltrimethoxysilan : Methacryloxypropyltrimethoxysilan = 5 : 1 bis 1 : 5 ist.

8. Verfahren nach einem der Ansprüche 1 bis 7, **dadurch gekennzeichnet, dass** das Gewichtsverhältnis Glycidoxypropyltrimethoxysilan : Methacryloxypropyltrimethoxysilan = 3 : 1 bis 1 : 1 ist.

9. Verfahren nach einem der Ansprüche 1 bis 8, **dadurch gekennzeichnet, dass** der Anteil an Glycidoxypropyltrimethoxysilan 0,1 - 10 Gew.-%, bevorzugt 0,5 - 5 Gew.-%, besonders bevorzugt 1 - 3 Gew.-% bezogen auf das Gesamtgewicht der Siliconkautschukmischung beträgt.

## Claims

1. Process for producing composite mouldings using at least one addition-crosslinking silicone rubber mixture composed in essence of
(a) 100 parts of at least one alkenyl-containing linear or branched organopolysiloxane having at least 2 alkenyl groups, with a viscosity of from 0.01 to 30 000 Pas,
(b) at least one hydrosiloxane,
(c) at least one Pt catalyst or Rh catalyst and, where appropriate, an inhibitor,
(d) from 0.1 to 20 parts of glycidoxypropyltrimethoxysilane and methacryloxypropyltrimethoxysilane combined,
(e) from 0 to 200 parts of at least one, where appropriate surface-modified, filler,
and, where appropriate,
(f) other auxiliaries, and/or
(g) peroxide,
where the hydrosiloxane (b) has at least 2 SiH functions per molecule and is present in an amount such that the molar ratio of all of the SiH groups to the total amount of Si-bonded alkenyl groups is at least 1.0,
**characterized in that** the addition-crosslinking silicone rubber mixture is divided into 2 submixtures, of which the first comprises at least one organopolysiloxane (a), catalyst (c) and, where appropriate, fillers (e), and/or auxiliaries (f), and the second comprises at least one organopolysiloxane (a), at least one hydrosiloxane (b), glycidoxypropyltrimethoxysilane and methacryloxypropyltrimethoxysilane (d) and, where appropriate, fillers (e), auxiliaries (f) and/or inhibitor (c), and these two submixtures are not brought together until they reach the injection-moulding machine or an upstream mixing head with attached mixer, and are injected onto an inserted substrate or onto a substrate injection-moulded in the same mould.

2. Process for producing composite mouldings using at least one addition-crosslinking silicone rubber mixture composed in essence of
(a) 100 parts of at least one alkenyl-containing linear or branched organopolysiloxane having at least 2 alkenyl groups, with a viscosity of from 0.01 to 30 000 Pas,
(b) at least one hydrosiloxane,
(c) at least one Pt catalyst or Rh catalyst and, where appropriate, an inhibitor,
(d) from 0.1 to 20 parts of glycidoxypropyltrimethoxysilane and methacryloxypropyltrimethoxysilane combined,
(e) from 0 to 200 parts of at least one, where appropriate surface-modified, filler,
and, where appropriate,
(f) other auxiliaries, and/or
(g) peroxide,
where the hydrosiloxane (b) has at least 2 SiH functions per molecule and is present in an amount such that the molar ratio of all of the SiH groups to the total amount of Si-bonded alkenyl groups is at least 1.0,
**characterized in that** the addition-crosslinking silicone rubber mixture is divided into 3 submixtures, of which the first comprises at least one organopolysiloxane (a), catalyst (c) and, where appropriate, the fillers (e), and/or the auxiliaries (f), and the second comprises at least one organopolysiloxane (a), at least one hydrosiloxane (b), if not present in the third submixture, and, where appropriate, fillers (e), auxiliaries (f), and/or inhibitor (c), and the third comprises glycidoxypropyltrimethoxysilane and methacryloxypropyltrimethoxysilane (d) and, where appropriate, hydrosiloxane (b), if not present in the second submixture, and also organopolysiloxane (a) and fillers (e), and these are not brought together until they reach the injection-moulding machine or an upstream mixing head with attached static mixer, and are injected onto an inserted substrate or onto a substrate injection-moulded in the same mould.

3. Process according to Claim 1 or 2, **characterized in that** the organopolysiloxane (a) a siloxane composed of units of the general formula (I)
(R¹)ₐ(R²)_{b}SiO_{(4-a-b)/2} (I)
where
R¹ is a monovalent aliphatic radical having from 1 to 8 carbon atoms and
R² is an alkenyl radical having from 2 to 8 carbon atoms,
a = 0, 1, 2 or 3,
b = 0, 1 or 2
and the sum of a+b = 0, 1, 2 or 3,
with the proviso that the average number of radicals R² present per molecule is at least 2.

4. Process according to any of Claims 1 to 3, **characterized in that** the hydrosiloxanes (b) siloxanes composed of units of the general formula (II)
(R¹)_{c}(H)_{d}SiO_{(4-c-d)/2}
where
R¹ = monovalent aliphatic radical having from 1 to 8 carbon atoms,
c = 0, 1, 2 or 3,
d = 0, 1 or 2,
where the sum of c+d = 0, 1, 2 or 3,
with the proviso that the average number of Si-bonded hydrogen atoms per molecule is at least 2.

5. Process according to any of Claims 1 to 4, **characterized in that** 2,4-dichlorobenzoyl peroxide and 4-methyl peroxide are present as peroxides in the mixture.

6. Process according to any of Claims 1 to 5, **characterized in that** the glycidoxypropyltrimethoxysilane : methacryloxypropyltrimethoxysilane ratio by weight = from 10 : 1 to 1 : 10.

7. Process according to any of Claims 1 to 6, **characterized in that** the glycidoxypropyltrimethoxysilane : methacryloxypropyltrimethoxysilane ratio by weight = from 5 : 1 to 1 : 5.

8. Process according to any of Claims 1 to 7, **characterized in that** the glycidoxypropyltrimethoxysilane : methacryloxypropyltrimethoxysilane ratio by weight = from 3 : 1 to 1 : 1.

9. Process according to any of Claims 1 to 8, **characterized in that** the content of glycidoxypropyltrimethoxysilane is from 0.1 to 10% by weight, preferably from 0.5 to 5% by weight, particularly preferably from 1 to 3% by weight, based on the total weight of the silicone rubber mixture.

## Revendications

1. Procédé de préparation de pièces moulées composites avec au moins un mélange de caoutchouc silicone réticulant par addition, consistant essentiellement en
(a) 100 parties d'au moins un organopolysiloxane linéaire ou ramifié, contenant des radicaux alcénylène, avec au moins 2 radicaux alcénylène, avec une viscosité de 0,01 à 30 000 Pas,
(b) au moins un hydrogénosiloxane,
(c) au moins un catalyseur au Pt ou Rh et le cas échéant, un inhibiteur,
(d) 0,1 à 20 parties de glycidoxypropyltriméthoxysilane et de méthacryloxypropyltriméthoxysilane en combinaison,
(e) 0 à 200 parties d'au moins une charge, le cas échéant modifiée en surface,
et le cas échéant
(f) d'autres auxiliaires et/ou
(g) un peroxyde,
où l'hydrogénosiloxane (b) présente au moins 2 fonctions SiH par molécule et est présent en une quantité telle que le rapport molaire de tous les radicaux SiH à la quantité totale des radicaux alcénylène liés à Si s'élève à au moins 1,0,
**caractérisé en ce que** le mélange de caoutchouc silicone réticulant par addition est divisé en 2 mélanges partiels, dont le premier contient au moins un organopolysiloxane (a), le catalyseur (c) et le cas échéant, la charge (e) et/ou des auxiliaires (f) et le deuxième, au moins un organopolysiloxane (a), au moins un hydrogénosiloxane (b), le glycidoxypropyltriméthoxysilane et de méthacryloxypropyltriméthoxysilane (d) et le cas échéant, la charge (e), des auxiliaires (f) et/ou l'inhibiteur (c), et ces deux mélanges partiels sont amenés dans des appareils de moulage par injection ou dans une tête de mélange disposée avant un mélangeur et sont pulvérisés sur un substrat introduit ou un substrat moulé par injection dans le même moule.

2. Procédé de préparation de pièces moulées composites avec au moins un mélange de caoutchouc silicone réticulant par addition, consistant essentiellement en
(a) 100 parties d'au moins un organopolysiloxane linéaire ou ramifié, contenant des radicaux alcénylène, avec au moins 2 radicaux alcénylène, avec une viscosité de 0,01 à 30 000 Pas,
(b) au moins un hydrogénosiloxane,
(c) au moins un catalyseur au Pt ou Rh et le cas échéant, un inhibiteur,
(d) 0,1 à 20 parties de glycidoxypropyltriméthoxysilane et de méthacryloxypropyltriméthoxysilane en combinaison,
(e) 0 à 200 parties d'au moins une charge, le cas échéant modifiée en surface,
et le cas échéant
(f) d'autres auxiliaires et/ou
(g) un peroxyde,
où l'hydrogénosiloxane (b) présente au moins 2 fonctions SiH par molécule et est présent en une quantité telle que le rapport molaire de tous les radicaux SiH à la quantité totale des radicaux alcénylène liés à Si s'élève à au moins 1,0,
**caractérisé en ce que** le mélange de caoutchouc silicone réticulant par addition est divisé en 3 mélanges partiels, dont le premier contient au moins un organopolysiloxane (a), le catalyseur (c) et le cas échéant, la charge (e) et/ou des auxiliaires (f), le deuxième, au moins un organopolysiloxane (a), au moins un hydrogénosiloxane (b), dans la mesure où il n'est pas présent dans le troisième mélange et le cas échéant, la charge (e), des auxiliaires (f) et/ou l'inhibiteur (c), et le troisième, le glycidoxypropyltriméthoxysilane et de méthacryloxypropyltriméthoxysilane (d) et le cas échéant, l'hydrogénosiloxane (b), dans la mesure où il n'est pas présent dans le deuxième mélange, ainsi que l'organopolysiloxane (a) et la charge (e), et ceux-ci sont amenés dans des appareils de moulage par injection ou dans une tête de mélange disposée avant un mélangeur statique et sont pulvérisés sur un substrat introduit ou un substrat moulé par injection dans le même moule.

3. Procédé selon la revendication 1 ou 2, **caractérisé en ce que** l'organopolysiloxane (a) est un siloxane constitué des unités de la formule générale (I) :
(R¹)ₐ(R²)_{b}SiO_{(4-a-b)/2} (I)
dans laquelle:
R¹ représente un reste aliphatique monovalent avec 1 à 8 atomes de carbone, et
R² représente un reste alcénylène avec 2 à 8 atomes de carbone,
a = 0, 1, 2 ou 3,
b = 0, 1 ou 2,
et la somme a + b = 0, 1, 2 ou 3,
avec la condition que en moyenne, au moins deux restes R² sont présents par molécule.

4. Procédé selon l'une quelconque des revendications 1 à 3, **caractérisé en ce que** l'hydrogénosiloxane (b) est un siloxane constitué des unités de la formule générale (II) :
(R¹)_{c}(H)_{d}SiO_{(4-c-d)/2}
dans laquelle:
R¹ représente un reste aliphatique monovalent avec 1 à 8 atomes de carbone, et
c = 0, 1, 2 ou 3,
d = 0, 1 ou 2,
et la somme c + d = 0, 1, 2 ou 3,
avec la condition que en moyenne, au moins deux atomes d'hydrogène liés à Si sont présents par molécule.

5. Procédé selon l'une quelconque des revendications 1 à 4, **caractérisé en ce que** le mélange contient comme peroxyde, le peroxyde de 2,4-dichlorobenzoyle et le 4-méthylperoxyde.

6. Procédé selon l'une quelconque des revendications 1 à 5, **caractérisé en ce que** le rapport pondéral glycidoxypropyltriméthoxysilane:méthacryloxypropyltriméthoxysilane = 10:1 à 1:10.

7. Procédé selon l'une quelconque des revendications 1 à 6, **caractérisé en ce que** le rapport pondéral glycidoxypropyltriméthoxysilane:méthacryloxypropyltriméthoxysilane = 5:1 à 1:5.

8. Procédé selon l'une quelconque des revendications 1 à 7, **caractérisé en ce que** le rapport pondéral glycidoxypropyltriméthoxysilane:méthacryloxypropyltriméthoxysilane = 3:1 à 1:3.

9. Procédé selon l'une quelconque des revendications 1 à 8, **caractérisé en ce que** la quantité de glycidoxypropyltriméthoxysilane s'élève de 0,1-10% en poids, de préférence de 0,5-5% en poids, de manière particulièrement préférée de 1-3% en poids, sur base du poids total du mélange de caoutchouc silicone.
